# EUROPÄISCHE PATENTSCHRIFT

(11) **EP 1 422 153 B1**
(45) Veröffentlichungstag und Bekanntmachung des Hinweises auf die Patenterteilung: **04.04.2012**
(21) Anmeldenummer: 03026765.2
(22) Anmeldetag: 21.11.2003
(51) Int. Cl.: B65D 25/28, B65D 23/10

(54) **Trinkgefäss**
Drinking vessel
Récipient à boire

(30) Priorität: 22.11.2002 DE 20218171 U
(43) Veröffentlichungstag der Anmeldung: 26.05.2004
(73) Patentinhaber: Wuermeling, Michael, 86356 Neusäss (DE)
(72) Erfinder: Wuermeling, Michael, 86356 Neusäss (DE)
(74) Vertreter: Becker Kurig Straus

(56) Entgegenhaltungen:
- WO-A-02/057158
- DE-U- 9 402 185
- FR-A- 2 385 610
- GB-A- 2 061 868
- US-B1- 6 364 385

## Beschreibung

Die vorliegende Erfindung betrifft ein Trinkgefäß gemäß dem Obergriff Anspruchs 1, welches mit einer Befestigungsvorrichtung vorzugsweise an einem Finger eines Benutzers befestigt werden kann.

Bisherige Trinkgefäße,wie beispielsweise Becher, werden an der äußeren Oberfläche umgriffen. Andere Trinkgefäße wie Tassen und Krüge weisen zur einfacheren Handhabung Griffe bzw. Henkel auf, um das Gefäß zu halten und zum Mund zu führen. Andere Trinkgefäße wie beispielsweise Römer oder Weingläser weisen einen Stiel auf, an dem das Trinkgefäß gegriffen werden kann. Derartige Trinkgefäße weisen üblicherweise einen Boden oder einen Fuß auf, um das Trinkgefäß darauf abzustellen. Alle bekannten Trinkgefäße müssen von dem Benutzer gehalten werden, was bei längerer Dauer zur Ermüdung des Benutzers führt.

Aus dem Gebrauchsmuster G 9402185.6 ist eine Flasche bekannt, in deren Flaschenboden eine Fingeraufnahme als Einwölbung nach innen vorgesehen ist. Die Flasche ist ansonsten wie üblich zum Flaschenhals hin eng zulaufend ausgebildet.

Die Aufgabe der vorliegenden Erfindung ist es, ein Trinkgefäß bereitzustellen, das eine andere Möglichkeit des Haltens und Trinkens gestattet und das es erlaubt, an einem oder mehreren menschlichen Fingern befestigt bzw. gehalten zu werden.

Eine weitere Aufgabe der vorliegenden Erfindung besteht darin, dem Benutzer des Trinkgefäßes eine neuartige Trinkbewegung, und somit einen neuartigen Trinkgenuss zu ermöglichen.

Das Trinkgefäß gemäß der vorliegenden Erfindung ist im Anspruch 1 angegeben und hat den Vorteil, dass das Trinkgefäß weitgehend ermüdungsfrei getragen bzw. gehalten werden kann.

Das Trinkgefäß gemäß der vorliegenden Erfindung weist weiter den Vorteil auf das, dass das Trinkgefäß eine neuartige Trinkbewegung ermöglicht. Insbesondere bei Festen und anderen öffentlichen Veranstaltungen kann das Trinkgefäß zum Einsatz kommen.

Das erfindungsgemäße Trinkgefäß weist eine Entleer- bzw. Füllöffnung auf, die so angeordnet ist, dass sie im Wesentlichen in dieselbe Richtung weist wie die Fingerkuppe des Fingers, an dem das Trinkgefäß befestigt ist. Die Trinköffnung weist dabei bei einem senkrecht erhobenen Finger nach oben, so dass das volle Trinkgefäß an einem erhobenen Finger bzw. Daumen getragen werden kann.

Das erfindungsgemäße Trinkgefäß ist aus lebensmittelechtem bzw. lebensmittelverträglichem Material hergestellt. Das Trinkgefäß ist mit einer Vorrichtung zur Befestigung an mindestens einem menschlichen Finger ausgestattet. Die Befestigungsvorrichtung ist so angebracht, dass der mindestens eine ausgestreckte Finger im Wesentlichen parallel zu der Längsachse des Trinkgefäßes angeordnet liegt, wenn das Trinkgefäß (mit der Befestigungsvorrichtung) von dem mindestens einen Finger getragen bzw. daran befestigt ist.

Die vorliegende Erfindung stellt somit ein Trinkgefäß dar, das auf einen Finger aufgesteckt werden kann, quasi einen "Trinkfinger" definierend. Ist in dem Gefäß ein Getränk verpackt, kann dieses als "Fingerdrink" bezeichnet werden.

Die Vorrichtung zur Befestigung kann dazu ausgelegt sein, an genau einem Finger befestigt zu werden.

Das Trinkgefäß kann mindestens eine weitere Vorrichtung zur Befestigung an mindestens einem weiteren Finger aufweisen.

Das Trinkgefäß kann mit einem Verschluss versehen sein. Der Verschluss kann als Schnellverschluss oder Einwegverschluss zum einmaligen Öffnen ausgeführt sein. Der Verschluss kann beispielsweise aus Aluminiumblech oder -folie mit Ringpull oder Abziehlasche, als Schraubverschluss oder Abbrech- (wie bei einer Ampulle), Abreiß- bzw. Abbeiß-Kopf, als Klappverschluss, Drehverschluss, Kronenkorken, Einwegschnappdeckel oder dergleichen ausgeführt werden.

Das Trinkgefäß kann mit einer trinkbaren Flüssigkeit gefüllt sein. Die Flüssigkeit kann Alkohol enthalten. Die Flüssigkeit kann ferner Farbstoffe enthalten.

Das Gefäß kann mit Feststoffen gefüllt sein. Die Flüssigkeit kann dabei beispielsweise Kaugummi, Eis (-Kugeln) Schokolade oder Fruchtgummi enthalten. Das Trinkgefäß kann auch Mischungen aus Feststoffen wie Früchte (wie Pflaumen, Feigen, Kirschen und dergleichen) oder andere Teile (Gelatinestücke, Goldflitter und dgl.) darin und eine Flüssigkeit enthalten. Das Trinkgefäß kann auch Suspensionen (z.b. Fruchtmark) oder Emulsionen (z.b. Eierlikör) enthalten.

Die Befestigungsvorrichtung kann ein Rohrstück bzw. einen mit einer Bohrung versehenen zylindrischen Gegenstand aufweisen. Das Rohrstück kann konisch ausgeführt sein. Das Rohrstück kann einseitig abgeschlossen sein und z.B. als Fingerhut ausgeführt sein.

Das Trinkgefäß ist dadurch gekennzeichnet, dass die Längsachsen von Trinkgefäß und Befestigungsvorrichtung im wesentlichen miteinander fluchten.

Die Achse des Trinkgefäßes und die Achse der Befestigungsvorrichtung sind im Wesentlichen miteinander fluchtend ausgerichtet. Die Achse des Trinkgefäßes und die Achse der Befestigungsvorrichtung liegen im wesentlichen aufeinander bzw. fluchten miteinander.

Das Trinkgefäß kann zumindest teilweise aus verzehrbarem Material gefertigt sein. So kann das gesamte Trinkgefäß beispielsweise ganz oder teilweise aus Waffel, Keks, Schokolade, Kaugummi oder dergleichen ausgeführt sein. Ein eventuell vorhandener Verschluss kann beispielsweise als abbeißbare Kappe ausgeführt sein.

Im Folgenden werden die beigefügten Figuren näher erläutert. In den Figuren und in der Beschreibung werden gleiche Bezugszeichen verwendet, um gleiche oder ähnliche Elemente zu bezeichnen. In den teil-durchsichtigen Darstellungen sind verdeckte Kanten gestrichelt dargestellt.
Figur 1 stellt eine nicht erfindungsgemäße Ausführungsform eines Trinkgefäßes in einer perspektivischen Ansicht und in einer teil-durchsichtigen Seitenansicht dar.
Figur 2 stellt eine zweite nicht erfindungsgemäße Ausführungsform eines Trinkgefäßes in einer perspektivischen Ansicht und in einer teil-durchsichtigen Seitenansicht dar.
Figur 3 stellt eine dritte nicht erfindungsgemäße Ausführungsform eines Trinkgefäßes in einer perspektivischen Ansicht und in einer teil-durchsichtigen, teils geschnittenen Seitenansicht dar.
Figur 4 stellt eine vierte nicht erfindungsgemäße Ausführungsform eines Trinkgefäßes in einer perspektivischen Ansicht dar.
Figur 5 stellt verschiedene Ausführungsformen möglicher Verschlüsse des erfindungsgemäßen Trinkgefäßes in perspektivischen Ansichten und in einer Schnittansicht dar.
Figur 6a stellt ein bevorzugte konische Ausführungsform der vorliegenden Erfindung in perspektivischer teil-durchsichtiger Ansichten dar, während Figur 6b ein weiteres nicht erfindungsgemäßes Trinkgefäß zur Erläuterung zeigt.
Figur 7 stellt weitere nicht erfindungsgemäße Trinkgefäße in einer perspektivischen Ansicht und in einer seitlichen Ansicht dar.
Figur 8 stellt ein weiteres, nicht erfindungsgemäßes Trinkgefäßes mit einem Abbeißverschluss dar.

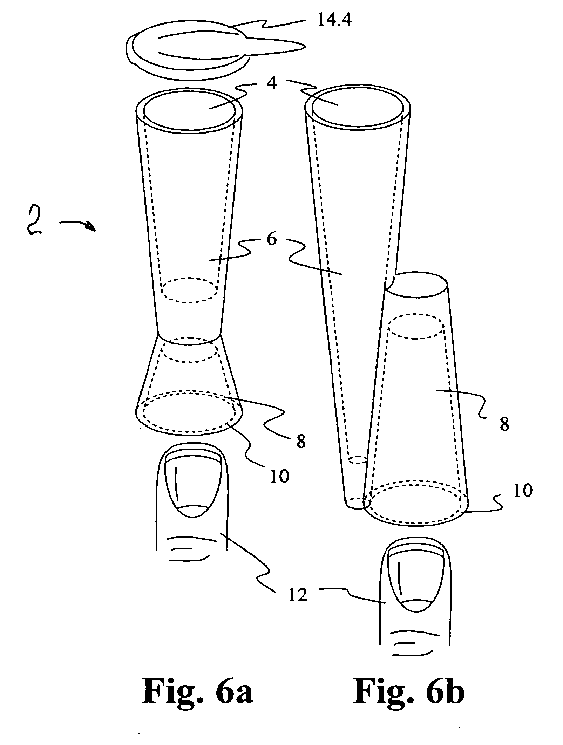

Eine erfindungsgemäße beispielhafte Ausführungsform wird mit Figur 6a gezeigt und beschrieben. Die übrigen gezeigten Ausführungsformen sollen nur dem besseren Verständnis und der ausführlichen Erläuterung der Erfindung dienen, soweit sie nicht unter die beanspruchte Erfindung fallen.

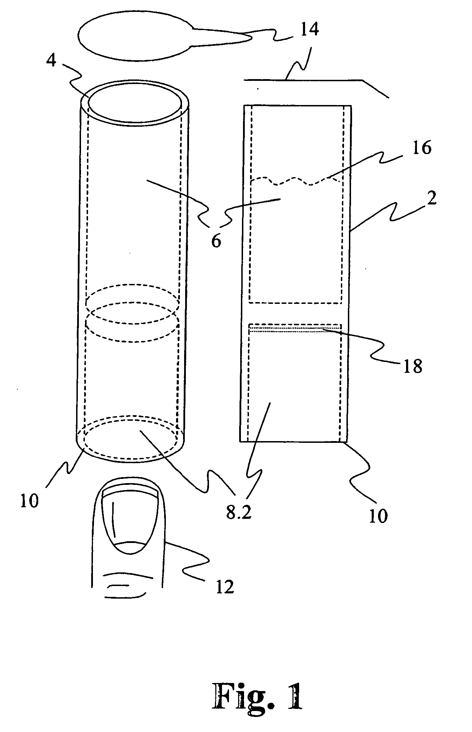

Figur 1 stellt ein nicht unter die Erfindung fallendes Beispiel eines Trinkgefäßes 2 in einer perspektivischen Ansicht und in einer teil-durchsichtigen Seitenansicht dar. Das Trinkgefäß 2 ist dabei im Wesentlichen als ein zylindrisches Rohrstück ausgeführt, das durch eine Trennwand einen oberen Bereich von einem unteren Bereich trennt. Der obere Bereich bildet das Volumen 6 zur Aufnahme eines Lebensmittels mit einer Entleer- bzw. Füllöffnung 4. Das Volumen 6 zur Aufnahme des Lebensmittels kann mittels eines Verschlusses 14 verschlossen werden. Der untere Bereich bildet ein Rohrstück 8.2 zur Aufnahme eines menschlichen Fingers 12. Das Rohrstück 8.2 bildet in dieser Ausführungsform die Befestigungsvorrichtung für den menschlichen Finger.

Das Rohrstück 8.2. kann, wie dargestellt kreiszylindrisch aufgebaut sein. Es kann aber alternativ eine zumindest abschnittsweise konische Form haben, um einen nach oben abnehmenden Querschnitt bereit zu stellen. Dadurch ist die klemmende Aufnahme von Fingern verschiedener Größen gewährleistet. Der untere Rand 10 des Rohrstücks 8.2 bildet eine Abstellfläche, auf der das Trinkgefäß 2 abgestellt werden kann, wenn es nicht an einem menschlichen Finger befestigt ist. Der Inhalt des Trinkgefäßes ist durch die gewellte Linie 16 angedeutet. Falls das Trinkgefäß 2 aus einem durchsichtigen Material beispielsweise durch Spritzgießen hergestellt ist, kann an der Stelle 18 ein Aufdruck oder eine bedruckte Scheibe angebracht werden, um Werbung oder Logos zu platzieren. Bei der in Figur 1 dargestellten Ausführungsform sind das Befestigungselement für den menschlichen Finger und das Volumen des Trinkgefäßes im Wesentlichen längsachsenmäßig miteinander fluchtend und auf einer gemeinsamen Achse angeordnet.

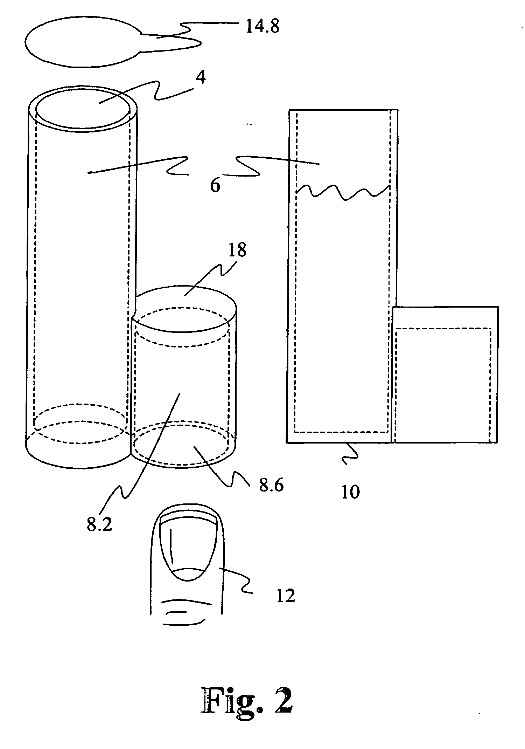

Figur 2 stellt eine zweite nicht erfindungsgemäße Ausführungsform eines Trinkgefäßes in einer perspektivischen Ansicht und in einer teil-durchsichtigen Seitenansicht dar. Zum Zwecke der Klarheit werden in den folgenden Figuren nur die Elemente beschrieben, die sich von der in Figur 1 gezeigten Ausführungsform unterscheiden. Im Gegensatz zu der in Figur 1 gezeigten Ausführungsform ist das Rohrstück im Wesentlichen parallel zu dem Volumen 6 des Trinkgefäßes angeordnet. Dadurch kann das Trinkgefäß flacher gebaut werden. Die Fläche 18 kann leicht mit einem Aufdruck versehen werden. Die Figur 2 zeigt deutlich die Fingeröffnung 8.6 in dem, als abgeschlossenes Rohrstück ausgeführten Befestigungselement. Das Rohrstück kann auch als beidseitig offenes Rohrstück ausgeführt sein. Das Rohrstück kann, wie dargestellt kreiszylindrisch aufgebaut sein. Es kann aber alternativ eine zumindest abschnittsweise konische Form haben, um einen nach oben abnehmenden Querschnitt bereit zu stellen. Dadurch ist die klemmende Aufnahme von Fingern verschiedener Größen gewährleistet

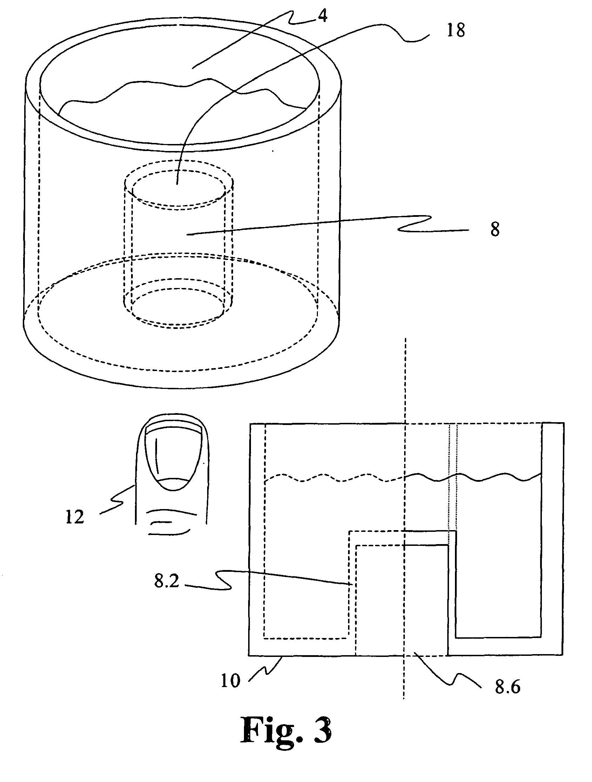

Figur 3 stellt eine dritte nicht erfindungsgemäße Ausführungsform eines Trinkgefäßes in einer perspektivischen Ansicht und in einer teil-durchsichtigen teilgeschnittenen Seitenansicht dar. Das Volumen des Trinkgefäßes ist wesentlich größer als bei den in den Figuren 1 und 2 dargestellten Ausführungsformen. In der perspektivischen Ansicht ist der Inhalt des gefüllten Trinkgefäßes durch die Entleer- bzw. Füllöffnung 4 zu erkennen. Das Finger-Befestigungselement 8 ist, wie in den vorstehenden Ausführungsformen, als ein Rohrstück 8.2 ausgeführt, in das ein Finger gesteckt werden kann. In der Teilschnittansicht ist auf der rechten Seite ein durchgehendes, nicht abgeschlossenes Rohrstück durch gepunktete Linien dargestellt. Die Abmessungen des Rohrstücks sollen dabei so bemessen werden, dass ein Finger in dem Rohrstück dicht umschlossen gehalten werden kann. Dazu kann das Rohrstück leicht konisch ausgeführt sein. In dieser Ausführungsform bildet der gesamte Boden eine Fläche 10, auf der das Trinkgefäß abgestellt werden kann.

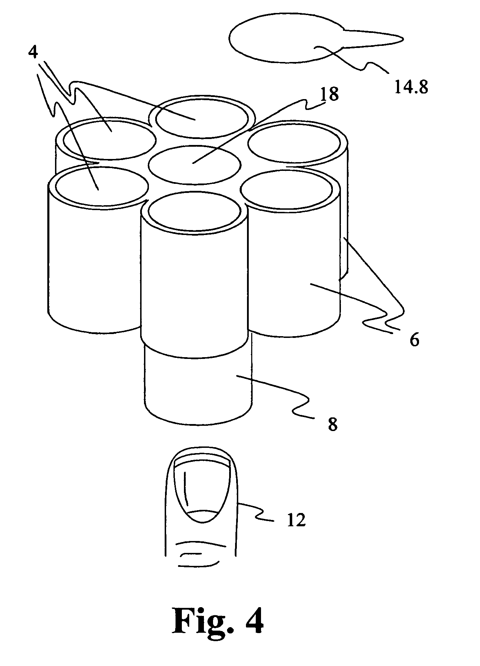

Figur 4 stellt eine vierte nicht erfindungsgemäße Ausführungsform eines Trinkgefäßes in einer perspektivischen Ansicht dar. Die dargestellte Ausführungsform ist durch sechs Trinkgefäße gekennzeichnet, die parallel zueinander angeordnet sind. Die einzelnen Trinkgefäße können einzeln mit jeweiligen Verschlüssen, wie beispielsweise dem dargestellten Abziehverschluss verschlossen sein, um es zu gestatten, die einzelnen Volumina nacheinander durch die jeweiligen Trinköffnungen 4 zu entleeren. Die mittlere Fläche 18 kann mit einem Aufdruck versehen werden. Andere Ausführungsformen mit zwei, drei, vier, fünf oder mehr Volumina 6 können ebenfalls verwirklicht werden.

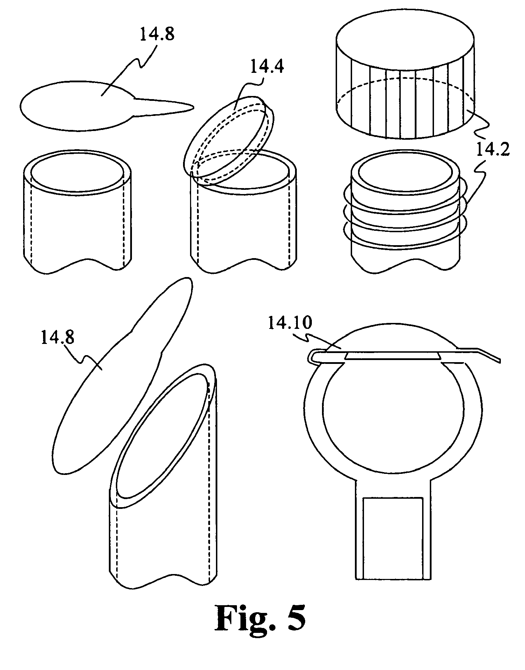

Figur 5 stellt verschiedene Ausführungsformen möglicher Verschlüsse des vorliegenden erfindungsgemäßen Trinkgefäßes in perspektivischen Ansichten und in einer Schnittansicht dar. Die Ausführungsform oben links zeigt einen Abziehverschluss 14.8. Die Ausführungsform oben, in der Mitte ist mit einem Abreißverschluss 14.4 versehen. Die Ausführungsform oben rechts zeigt einen Drehverschluss 14.2. Die Ausführungsform unten links zeigt einen Abziehverschluss 14.8 eines Trinkgefäßes mit einer schrägen Entleer- bzw. Füllöffnung. Die Schnittansicht unten rechts zeigt einen Klappverschluss 14-10, der an einem nicht erfindungsgemäßen Trinkgefäß in Kugel oder Ballform befestigt ist.

Figur 6 stellt verschiedene konische Ausführungsformen in perspektivischen teil-durchsichtigen Ansichten dar. Die linke Ausführungsform Figur 6a zeigt das Trinkgefäß gemäß der Erfindung und ist mit einem konischen Finger-Befestigungselement 8 und einem Abreißverschluss 14-4 versehen. Bei der linken Ausführungsform ist das konische Finger-Befestigungselement 8 und das Volumen 6 des Trinkgefäßes im Wesentlichen auf einer Linie.

Die rechte nicht erfindungsgemäße Ausführungsform kann aufgrund ihrer schlanken Gestalt als "Sektglas" betrachtet werden. Der Rand 10 und die Entleer- bzw. Füllöffnung 4 können bei der rechten Ausführungsform in Bezug auf eine Ebene senkrecht zur Längsachse leicht schräg ausgeführt werden, damit der Schwerpunkt des vollen Trinkgefäßes sich mehr in Richtung der Mitte des Randes 10 verlagert, sodass das Trinkgefäß sicher auf dem Rand 10 abgestellt werden kann. Diese Ausführungsform kann auch aus einer Folie hergestellt werden, indem zwei Kreis- oder Ringsegmente zu Kegeln gewickelt werden und an der Nahtstelle durch Verkleben oder Heißsiegeln verbunden werden. Als Folie kann Kunststofffolie oder eine Verbundfolie, wie sie beispielsweise von Tetrapack® bekannt ist, verwendet werden. Die Ausführungsform aus Verbundfolie hat weiterhin den Vorteil, dass ein Ab- oder Aufreißverschluss (Perforation oder Aufreißnaht) integral in der Folie gebildet werden kann.

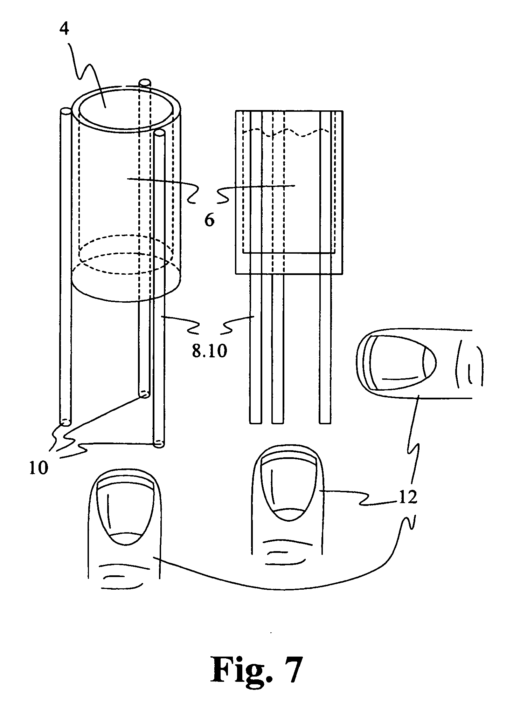

Figur 7 stellt ein weiteres nicht erfindungsgemäßes Beispiel eines Trinkgefäßes in einer perspektivischen Ansicht und in einer seitlichen, teil-durchsichtigen Ansicht dar. Das Befestigungselement wird in diesem Beispiel durch eine dreiteilige Klammer 8.10 gebildet, was es gestattet, das Trinkgefäß von vorne auf einen Finger oder eine Fingerkuppe aufzusetzen. Die Anordnung der dreiteiligen Klammer 8.10 gestattet es ebenfalls, das Trinkgefäß senkrecht zu einem Finger auf einen solchen aufzusetzen, wobei eine oder zwei der Klammern jeweils vor und hinter dem Finger, diesen einklemmen, wie es durch den rechten Finger 12 angedeutet ist. Die Klammer kann auch als zweiteilige Klammer ausgeführt werden, bei der die einzelnen Klammerelemente Rohrabschnitte bilden, um die den Finger 12 sicher greifen zu können. Die Klammer kann auch als mehrteilige Klammer ausgeführt werden, bei der die einzelnen Klammerelemente im Wesentlichen auf einer Zylinderoberfläche liegen. Bei Verwendung einer 8-teiligen Klammer kann das Trinkgefäß beispielsweise die Gestalt eines Kopffüßers aufweisen, wobei die Klammerelemente in der Gestalt von Tentakeln ausgeführt werden können.

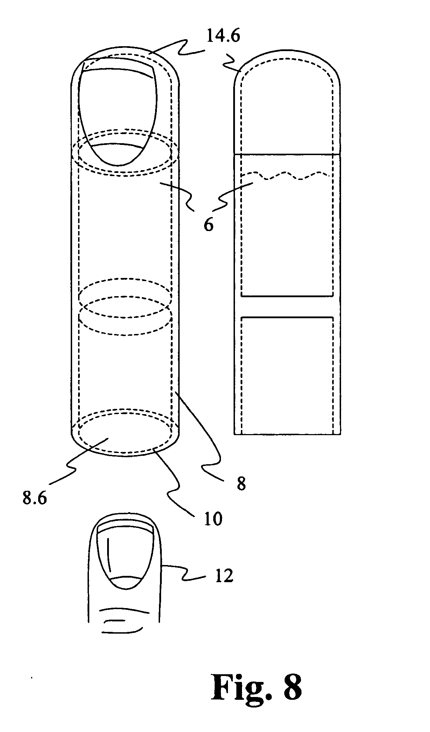

Figur 8 stellt ein weiteres nicht erfindungsgemäßes Beispiel eines Trinkgefäßes mit einem Abbeißverschluss dar. Die linke Ausführungsform des Trinkgefäßes ist einem menschlichen Finger nachgebildet, (angedeutet durch den dargestellten Fingernagel). Eine solche Ausführungsform kann besonders bei Partys, bei Halloween oder im Fasching verwendet werden, und beispielsweise mit einer gefärbten Flüssigkeit gefüllt sein. Das vorliegende Gefäß kann geöffnet werden, indem der Abbeißverschluss 14.6, der vorzugsweise aus einem verzehrbarem Material wie beispielsweise Schokolade oder Kaugummi hergestellt ist, abgebissen wird und der Inhalt durch die, so gebildete Öffnung getrunken wird. Das Trinkgefäß kann auch die Gestalt eines Lippenstiftes, einer Patrone, einer Kartoffel, einer Frucht, eines Gemüses oder dergleichen aufweisen.

Die dargestellten Gefäße können aus Kunststoff, Glas, aber auch aus Metall-Folie oder aus Pappe gebildet sein. Die Wahl des Materials richtet sich nach der Art der Anwendung und dem Flüssigkeitstyp. Die Befestigungsvorrichtung kann einstückig, getrennt und aus anderem Material als das Gefäß ausgeführt werden.

### Bezugszeichenliste

- 2: Trinkgefäß
- 4: Entleer- bzw. Füllöffnung
- 6: Volumen
- 8: Finger-Befestigungsvorrichtung
8.2 Rohrstück
8.6 Fingeröffnung
- 10: Aufstellfläche
- 12: Finger
- 14: Verschluss
14.2 Schraubverschluss
14.4 Abreißverschluss
14.6 Abreißverschluss
14.8 Abziehverschluss
14.10 Klappverschluss
- 16: Inhalt
- 18: Platzierungsmöglichkeit für Aufdrucke

## Patentansprüche

1. Trinkgefäß (2) aus lebensmittelverträglichem Material mit einem Behälter (4) und einer Vorrichtung (8) zur Befestigung bzw. Aufnahme an mindestens einem menschlichen Finger (12), wobei die Befestigungsvorrichtung (8) so angebracht ist, dass der mindestens eine Finger(12) im wesentlichen parallel zu der Längsachse des Trinkgefäßes (2) angeordnet ist, wenn das Trinkgefäß (2) an dem mindestens einen Finger (12) aufgenommen ist, **dadurch gekennzeichnet, dass** der Behälter (4) nach oben sich konisch erweiternd ausgebildet ist, die Befestigungsvorrichtung (8) eine konisch ausgebildete Aufnahme aufweist und der Behälter (4) sowie die Aufnahme auf einer Linie miteinander fluchten.

2. Trinkgefäß nach Anspruch 1, **dadurch gekennzeichnet, dass** der Behälter (4) und die Vorrichtung (8) zur Befestigung einstückig ausgeführt sind.

3. Trinkgefäß gemäß Anspruch 1, **dadurch gekennzeichnet, dass** das Trinkgefäß (2) eine Vorrichtung (8) zur Befestigung an genau einem Finger (12) aufweist.

4. Trinkgefäß gemäß einem der vorstehenden Ansprüche, **dadurch gekennzeichnet, dass** das Trinkgefäß (2) mit einem Verschluss (14) versehen ist.

5. Trinkgefäß gemäß Anspruche 4, **dadurch gekennzeichnet, dass** der Verschluss (14) ein Schnellverschlussist.

6. Trinkgefäß gemäß einem der vorstehenden Ansprüche, **dadurch gekennzeichnet, dass** das Trinkgefäß mit einer Flüssigkeit gefüllt ist.

7. Trinkgefäß gemäß einem der vorstehenden Ansprüche, **dadurch gekennzeichnet, dass** das Trinkgefäß (2) mit Feststoffen gefüllt ist.

8. Trinkgefäß gemäß einem der vorstehenden Ansprüche, **dadurch gekennzeichnet, dass** die Befestigungsvorrichtung (8) ein Rohrstück aufweist.

## Claims

1. A beverage vessel (2) consisting of food-compatible material and a container (4) and a device (8) for fastening to or accommodating on, respectively, at least one human finger (12), wherein the fastening device (8) is attached such that the at last one finger (12) is arranged substantially parallel to the longitudinal axis of the drinking vessel (2) when the drinking vessel (2) is accommodated on the at least one finger (12), **characterized in that** the container (4) is embodied so as to conically widen upwards, the fastening device (8) encompasses a conically embodied accommodation and the container (4) as well as the accommodation are aligned with one another on a line.

2. The beverage vessel according to claim 1, **characterized in that** the container (4) and the device (8) for fastening are embodied in one piece.

3. The beverage vessel according to claim 1, **characterized in that** the beverage vessel (2) encompasses a device (8) for fastening to exactly one finger (12).

4. The beverage vessel according to one of the preceding claims, **characterized in that** the beverage vessel (2) is provided with a closure (14).

5. The beverage vessel according to claim 4, **characterized in that** the closure (14) is a snap closure.

6. The beverage vessel according to one of the preceding claims, **characterized in that** the beverage vessel is filled with a liquid.

7. The beverage vessel according to one of the preceding claims, **characterized in that** the beverage vessel (2) is filled with solid matter.

8. The beverage vessel according to one of the preceding claims, **characterized in that** the fastening device (8) encompasses a pipe section.

## Revendications

1. Récipient à boire (2) en une matière compatible alimentaire, avec un réservoir (4) et un dispositif (8) destiné à être fixé sur ou repris par au moins un doigt (12) d'une personne, le dispositif de fixation (8) étant monté de telle sorte que l'au moins un doigt (12) soit sensiblement placé à la parallèle de l'axe longitudinal du récipient à boire (2) lorsque le récipient à boire (2) est repris par l'au moins un doigt (12), **caractérisé en ce que** le réservoir (4) est conçu en s'élargissant sous forme conique vers le haut, que le dispositif de fixation (8) comporte un logement conçu sous forme conique et que le réservoir (4) ainsi que le logement sont alignés l'un sur l'autre sur une ligne.

2. Récipient à boire selon la revendication 1, **caractérisé en ce que** le réservoir (4) et le dispositif (8) de fixation sont conçus en monobloc.

3. Récipient à boire selon la revendication 1, **caractérisé en ce que** le récipient à boire (2) comporte un dispositif (8) à fixer sur précisément un doigt (12).

4. Récipient à boire selon l'une quelconque des revendications précédentes, **caractérisé en ce que** le récipient à boire (2) est muni d'une fermeture (14).

5. Récipient à boire selon la revendication 4, **caractérisé en ce que** la fermeture (14) est une fermeture rapide.

6. Récipient à boire selon l'une quelconque des revendications précédentes, **caractérisé en ce que** le récipient à boire est rempli d'un liquide.

7. Récipient à boire selon l'une quelconque des revendications précédentes, **caractérisé en ce que** le récipient à boire (2) est rempli de matières solides.

8. Récipient à boire selon l'une quelconque des revendications précédentes, **caractérisé en ce que** le dispositif de fixation (8) comporte un tronçon de tube.
